# EUROPEAN PATENT SPECIFICATION

(11) **EP 3 646 969 B1**
(45) Date of publication and mention of the grant of the patent: **29.11.2023**
(21) Application number: 19205379.1
(22) Date of filing: 25.10.2019
(51) Int. Cl.: B22F 3/105, B29C 64/209, B29C 64/393, B33Y 10/00, B33Y 30/00, B33Y 50/02, B29C 64/141, B23K 26/144, B23K 26/342, B23K 26/02

(54) **ADDITIVE MANUFACTURING APPARATUS, ADDITIVE MANUFACTURING METHOD, AND COMPUTER PROGRAM PRODUCT**
VORRICHTUNG ZUR GENERATIVEN FERTIGUNG, VERFAHREN ZUR GENERATIVEN FERTIGUNG UND COMPUTERPROGRAMMPRODUKT
APPAREIL DE FABRICATION ADDITIVE, PROCÉDÉ DE FABRICATION ADDITIVE ET PRODUIT-PROGRAMME D'ORDINATEUR

(30) Priority: 29.10.2018 JP 2018203303
(43) Date of publication of application: 06.05.2020
(73) Proprietor: Toshiba Kikai Kabushiki Kaisha, Chiyoda-ku Tokyo 100-0011 (JP)
(72) Inventor: Fukase, Yasushi, Shizuoka, 410-8510 (JP); Fujimaki, Shimpei, Shizuoka, 410-8510 (JP); Fuwa, Hisanori, Shizuoka, 410-8510 (JP); Tanigaki, Shogo, Shizuoka, 410-8510 (JP)
(74) Representative: Henkel & Partner mbB

(56) References cited:
- WO-A1-2018/033859
- GB-A- 2 453 945
- US-A1- 2006 003 095
- EDWARD W REUTZEL ET AL: "A survey of sensing and control systems for machine and process monitoring of directed-energy, metal-based additive manufacturing", RAPID PROTOTYPING JOURNAL, vol. 21, no. 2, 16 March 2015 (2015-03-16) , pages 159-167, XP055479751, GB ISSN: 1355-2546, DOI: 10.1108/RPJ-12-2014-0177

## Description

### FIELD

Embodiments described herein relate generally to an additive manufacturing apparatus, an additive manufacturing method, and a computer program product.

### BACKGROUND

Additive manufacturing apparatuses are known, which supply powdery material and output laser light from a nozzle to solidify the material, and form layers of the solidified material (e.g., Japanese Laid-open Patent Publication No. 2015-085547). The additive manufacturing apparatuses add a layer upon a layer of the solidified material, thereby additively manufacturing a three-dimensional object. The additive manufacturing apparatuses can additively manufacture objects having various shapes by changing the orientation of the nozzle, for example.

The orientation of the nozzle may incline with respect to the normal direction of a processing reference plane, causing a change in layer thickness in the normal direction of the processing reference plane. In such a case, shape error may occur in the object.

US 2006/003095 A1 discloses apparatuses and methods for producing greater angle or overhanging deposits on a structure.

### SUMMARY

According to the present invention, there is provided an additive manufacturing apparatus as set out in independent claim 1, an additive manufacturing method as set out in independent claim 3, and a computer program product as set out in independent claim 8. Advantageous developments are defined in the dependent claims.

### BRIEF DESCRIPTION OF THE DRAWINGS

FIG. 1 is an exemplary perspective view schematically illustrating an additive manufacturing apparatus according to a first embodiment;
FIG. 2 is an exemplary sectional view schematically illustrating part of the additive manufacturing apparatus and an object according to the first embodiment;
FIG. 3 is an exemplary block diagram functionally illustrating the configuration of the additive manufacturing apparatus according to the first embodiment;
FIG. 4 is an exemplary view schematically illustrating the object and a nozzle according to the first embodiment;
FIG. 5 is an exemplary view schematically illustrating the relation between the inclination angle of the nozzle and the thickness of a layer according to the first embodiment;
FIG. 6 is an exemplary flowchart of a procedure of additive manufacturing of the object by the additive manufacturing apparatus according to the first embodiment;
FIG. 7 is an exemplary block diagram functionally illustrating the configuration of the additive manufacturing apparatus according to a second embodiment;
FIG. 8 is an exemplary flowchart of a procedure of additive manufacturing of the object by the additive manufacturing apparatus according to the second embodiment;
FIG. 9 is an exemplary block diagram functionally illustrating the configuration of the additive manufacturing apparatus and an external computer according to a third embodiment; and
FIG. 10 is an exemplary flowchart of a procedure of changing a layer forming condition in an NC program by the external computer according to the third embodiment.

### DETAILED DESCRIPTION

### First embodiment

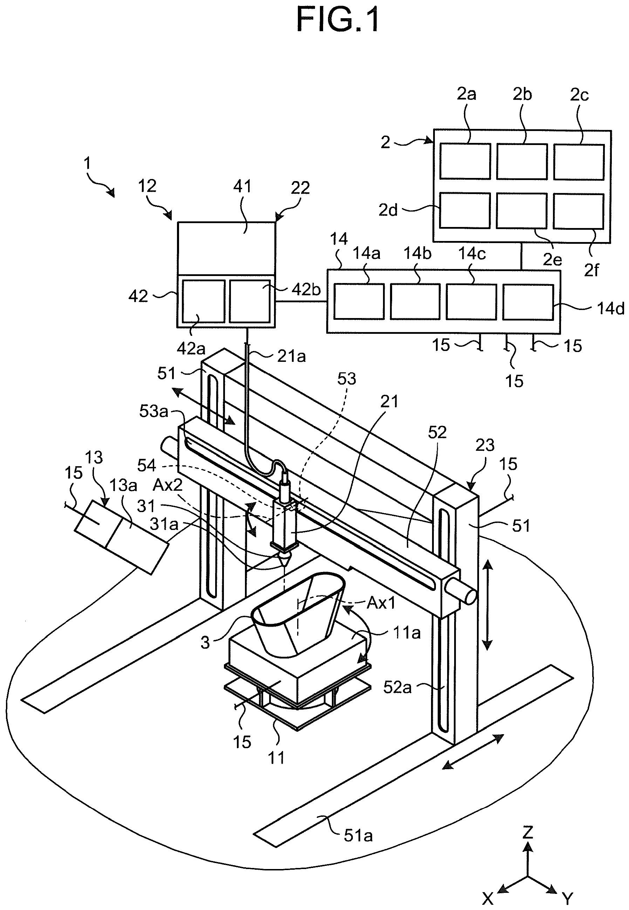

A first embodiment is described below with reference to FIGS. 1 to 6. In the present specification, the upper side in the vertical direction is referred to as an upper direction, and the lower side in the vertical direction is referred to as a lower direction. In the present specification, components according to the embodiment and explanation of the components may possibly be described in a plurality of representations. The components and the explanation thereof are given by way of example only and are not limited by the representations in the present specification. The components may be identified by names different from those in the present specification. The components may be explained by representations different from those in the present specification.

FIG. 1 is an exemplary perspective view schematically illustrating an additive manufacturing apparatus 1 according to the first embodiment. The additive manufacturing apparatus 1 is what is called a three-dimensional printer with a laser material deposition system. The additive manufacturing apparatus 1 is not limited to this example.

In the present specification, an X-axis, a Y-axis, and a Z-axis are defined as illustrated in the drawings. The X-axis, the Y-axis, and the Z-axis are orthogonal to one another. The Z-axis extends in the vertical direction, for example. The X-axis and the Y-axis extend in the horizontal direction, for example. The additive manufacturing apparatus 1 may be disposed with the Z-axis obliquely intersecting the vertical direction.

The additive manufacturing apparatus 1 is connected to an external computer 2 in a communicable manner by wire or wirelessly, for example. Examples of the external computer 2 include, but are not limited to, a personal computer, a server, a tablet terminal, a personal digital assistant (PDA), another computer, etc.

The external computer 2 includes a central processing unit (CPU) 2a, a read only memory (ROM) 2b, a random access memory (RAM) 2c, a storage 2d, an input device 2e, and an output device 2f, for example. The CPU 2a controls the external computer 2 and the additive manufacturing apparatus 1 connected thereto by executing computer programs installed in the ROM 2b or the storage 2d. The ROM 2b stores therein computer programs and data required to execute the computer programs. The RAM 2c functions as a work area in execution of the computer programs. The storage 2d is a device, such as a hard disk drive (HDD) and a solid state drive (SSD), that can store, change, and delete data. The input device 2e is various input devices, such as a keyboard, a mouse, or a touch panel. The output device 2f is various output devices, such as a display or a speaker.

The additive manufacturing apparatus 1 acquires a numerical control (NC) program for additive manufacturing from the external computer 2, for example. The additive manufacturing apparatus 1 is not limited to this example. The additive manufacturing apparatus 1 may acquire the NC program from an information storage medium, such as a memory card, or read it from a storage device included in the additive manufacturing apparatus 1.

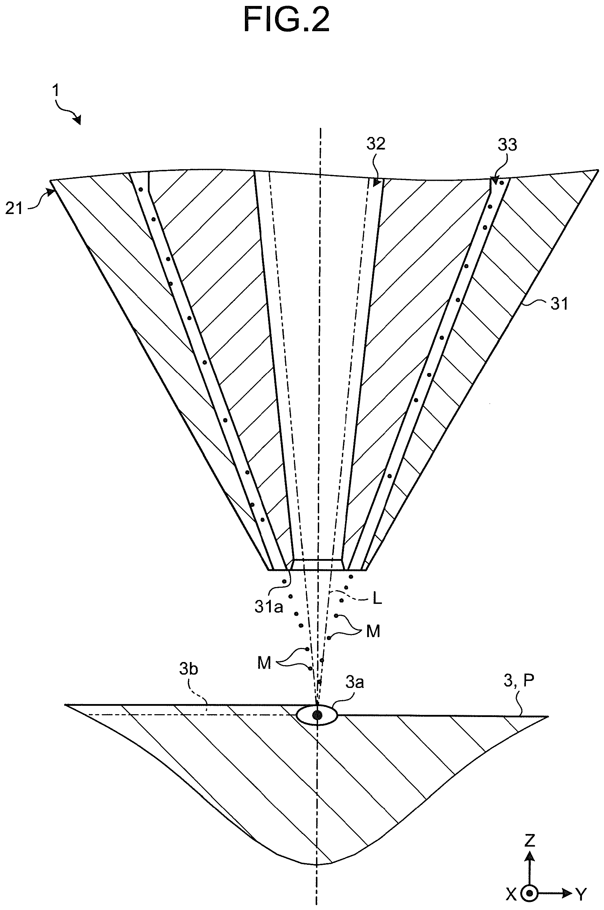

FIG. 2 is an exemplary sectional view schematically illustrating part of the additive manufacturing apparatus 1 and an object 3 according to the first embodiment. The additive manufacturing apparatus 1 adds a layer upon a layer of powdery material M, for example, thereby additively manufacturing the object 3 having a given shape. The material M is an example of powder. The object 3 is an example of an additively manufactured object.

As illustrated in FIG. 1, the additive manufacturing apparatus 1 includes a table 11, a manufacturing unit 12, a measuring unit 13, a control unit 14, and a plurality of signal lines 15. The table 11, the manufacturing unit 12, the measuring unit 13, and the control unit 14 are covered with a housing of the additive manufacturing apparatus 1 or disposed in a manufacturing room, for example.

The table 11 has a support surface 11a. The support surface 11a has a substantially flat shape and faces in the direction of the Z-axis (direction indicated by the arrow of the Z-axis or upward). The support surface 11a supports a finished object 3, an object 3 in progress, or a base on which the material M is layered. In the following description, the object 3 includes the finished object 3, the object in progress 3, and the base. Upon completion of additive manufacturing, the part of the object 3, i.e., the layers of the material M are integrated with the base. According to the present embodiment, the support surface 11a serves as a processing reference plane for additive manufacturing of the object 3. Alternatively, the surface of the base may serve as the processing reference plane.

At least part of the table 11 rotates, thereby rotating the object 3 supported by the support surface 11a about a first center of rotation Ax1. The first center of rotation Ax1 extends in the vertical direction (Z-axis direction).

The table 11 may move the object 3 in the X-axis, the Y-axis, and the Z-axis directions. Furthermore, the table 11 may rotate the object 3 about a center of rotation extending in the Y-axis direction and a center of rotation extending in the X-axis direction.

The manufacturing unit 12 supplies and layers the material M on the support surface 11a or the base supported by the support surface 11a. The material M is a powdered metal, for example. The material M is not limited thereto and may be other materials, such as synthetic resin and ceramic. The additive manufacturing apparatus 1 may additively manufacture the object 3 from a plurality of kinds of materials M.

The manufacturing unit 12 includes a nozzle 21, a supply device 22, and a movement device 23. The nozzle 21 ejects the material M to the support surface 11a of the table 11 or the object 3 on the support surface 11a. As illustrated in FIG. 2, the nozzle 21 outputs laser light L to the ejected material M or the object 3 on the support surface 11a. The laser light L is an example of an energy ray.

The nozzle 21 outputs the laser light L concurrently with supplying the material M. The nozzle 21 may output other energy rays in addition to or instead of the laser light L. The energy ray may be any desired ray that can melt or sinter the material M like the laser light L and may be an electron beam, microwaves, or electromagnetic waves in the ultraviolet range, for example.

The manufacturing unit 12 heats the base or the ejected material M by the laser light L, thereby forming a melting region (bead) 3a. In the melting region 3a, the laser light L melts or sinters the material M to aggregate it. As described above, the melting region 3a can include not only the supplied material M but also part of the base or the object 3 irradiated with the laser light L. The melting region 3a is not limited to completely melted material M and may be a combination of partially melted material M.

By solidifying the melting region 3a, a layer 3b serving as an aggregate of the material M having a layer- or a film-like shape, for example, is formed on the base or the object 3. The material M may be cooled by heat transfer to the aggregate of the material M, thereby being layered in a granular form and formed into a granular aggregate (layer).

The manufacturing unit 12 may perform annealing by outputting the laser light L to the aggregate of the material M from the nozzle 21. The aggregate of the material M is remelted or re-sintered by the laser light L and then solidified, thereby being formed into the layer 3b.

The manufacturing unit 12 additively manufactures the object 3 by repeatedly forming the layers 3b. The layers 3b are part of the object 3. The layers 3b are included in the object 3. As described above, the nozzle 21 of the manufacturing unit 12 outputs the laser light L to melt or sinter the material M, to form the layers 3b. The manufacturing unit 12 repeatedly forms the layers 3b, thereby additively manufacturing the object 3 on the support surface 11a.

The nozzle 21 includes a nozzle head 31. An end 31a of the nozzle head 31 faces the object 3 with a gap. The nozzle head 31 is provided with an output passage 32 and a discharge passage 33. The output passage 32 and the discharge passage 33 open to the end 31a, for example.

The output passage 32 is a hole having a substantially circular section. The laser light L passes through the output passage 32 and is output to the outside of the nozzle head 31. The discharge passage 33 is a hole having a substantially annular section and surrounds the output passage 32. Carrier gas and the material M pass through the discharge passage 33 and are ejected to the outside of the nozzle head 31.

As illustrated in FIG. 1, the supply device 22 includes an optical device 41 and a material supply device 42. The optical device 41 includes a light source and an optical system, for example. The light source includes an oscillator and outputs the laser light L by oscillation of the oscillator. The light source can change the output (power) of the output laser light L.

The light source causes the output laser light L to enter into the optical system. The laser light L enters into the nozzle 21 via the optical system. The optical system can change the focal diameter of the laser light L. The optical device 41 supplies the laser light L to the output passage 32 of the nozzle 21 and outputs the laser light L from the output passage 32.

The nozzle 21 irradiates and heats the ejected material M with the laser light L, thereby forming and annealing the layer 3b of the material M. Furthermore, the nozzle 21 irradiates the object 3 with the laser light L, thereby removing an unnecessary part from the object 3.

The material supply device 42 includes a material supply unit 42a and a tank 42b. The tank 42b accommodates the material M. The material supply device 42 may include a plurality of tanks 42b that accommodate different kinds of materials M.

The material supply unit 42a supplies the material M in the tank 42b to the nozzle 21 via a supply pipe 21a. The material supply unit 42a supplies the material M to the nozzle 21 with carrier gas, for example. The carrier gas is inert gas, such as nitrogen and argon.

The material supply unit 42a supplies the carrier gas and the material M to the discharge passage 33 of the nozzle head 31 via the supply pipe 21a. As a result, the nozzle 21 ejects the carrier gas and the material M from the discharge passage 33. The material supply unit 42a can change the amount of the material M ejected from the nozzle 21 per unit time and the speed of the ejected material M.

The material supply unit 42a includes a tank that accommodates the carrier gas, a compressor that causes the carrier gas in the tank to flow into the supply pipe 21a, and a device that supplies the material M in the tank 42b to the flow of the carrier gas, for example. The material supply unit 42a may supply the material M to the nozzle 21 by other means.

The supply device 22 may also supply purge gas and shield gas to the nozzle 21 via the supply pipe 21a. The purge gas and the shield gas are inert gas, such as nitrogen and argon. The supply pipe 21a includes a pipe through which the carrier gas and the material M pass, a pipe through which the purge gas passes, a pipe through which the shield gas passes, and a cable through the laser light L passes.

The movement device 23 moves and rotates the nozzle 21. The movement device 23 includes a pair of columns 51, a cross rail 52, a movable element 53, and a rotation mechanism 54. The movement device 23 is not limited to this example and may be other devices, such as an articulated robot arm, that can move and rotate the nozzle 21.

The columns 51 serving as a pair are separated from each other in the Y-axis direction and extend in the Z-axis direction. The table 11 is positioned between the pair of columns 51 in the Y-axis direction. The columns 51 can move in the X-axis direction with respect to the table 11 by movement mechanisms 51a provided to the respective columns 51 and the floor, for example.

The movement mechanisms 51a each include various parts, such as an actuator provided in the corresponding column 51 and a rail provided on the floor and extending in the X-axis direction, that move the corresponding column 51 in the X-axis direction. The columns 51 serving as a pair are coupled to each other and can move in parallel with the X-axis direction.

The cross rail 52 extends in the Y-axis direction substantially linearly. Both ends of the cross rail 52 are supported by the pair of columns 51. In other words, the cross rail 52 is connected to the columns 51. The cross rail 52 can move in the Z-axis direction with respect to the columns 51 by movement mechanisms 52a provided to the respective columns 51 and the cross rail 52, for example.

The movement mechanisms 52a each include various parts, such as a ball screw and an actuator provided in the corresponding column 51, that move the cross rail 52 in the Z-axis direction. The cross rail 52 extends in the Y-axis direction and can move in parallel with the Z-axis direction. In other words, the cross rail 52 moves along the columns 51.

The movable element 53 can move in the Y-axis direction with respect to the cross rail 52 by a movement mechanism 53a provided to the cross rail 52, for example. As described above, the moving direction of the movable element 53 is orthogonal to the moving direction of the columns 51 and the cross rail 52.

The movement mechanism 53a includes various parts, such as a ball screw and an actuator provided in the cross rail 52, that move the movable element 53. The movable element 53 is a nut of the ball screw disposed in the cross rail 52, for example. The movable element 53 is connected to the movement mechanism 53a of the cross rail 52. The movable element 53 is moved along the cross rail 52 by the movement mechanism 53a.

The nozzle 21 is connected to the movable element 53. The rotation mechanism 54 rotates the nozzle 21 about a second center of rotation Ax2 with respect to the movable element 53. The second center of rotation Ax2 extends in the X-axis direction. The rotation mechanism 54 includes various parts, such as an actuator provided in the nozzle 21, that rotate the nozzle 21.

As described above, the movement device 23 can move the nozzle 21 relative to the support surface 11a and can change the orientation of the nozzle 21. According to the present embodiment, the orientation of the nozzle 21 is set for ejecting the material M and outputting the laser light L. The movement device 23 can change the movement speed of the nozzle 21 with respect to the support surface 11a. By moving and rotating the table 11, the nozzle 21 may be moved relative to the support surface 11a and changed in orientation with respect to the support surface 11a.

The measuring unit 13 measures the shapes of the object 3 and the layer 3b of the object 3 supported by the support surface 11a of the table 11. The measuring unit 13 includes a camera 13a, for example. The measuring unit 13 is not limited to this example and may include other devices, such as a laser measuring device, that can measure the shape of the layer 3b. The measuring unit 13 may also include an image processing device that processes information on the measured shapes of the object 3 and the layer 3b.

The control unit 14 is electrically connected to the table 11, the manufacturing unit 12, and the measuring unit 13 via the signal lines 15. The control unit 14 includes a CPU 14a, a ROM 14b, a RAM 14c, and a storage 14d, for example. The control unit 14 may also include an input device, such as a keyboard and a mouse, and an output device, such as a display and a speaker.

The control unit 14 controls the units of the additive manufacturing apparatus 1 by the CPU 14a executing computer programs installed in the ROM 14b or the storage 14d. The control unit 14 controls the nozzle 21, the optical device 41, the material supply device 42, and the movement device 23 of the manufacturing unit 12, for example.

The ROM 14b stores therein computer programs and data required to execute the computer programs. The RAM 14c functions as a work area in execution of the computer programs. The storage 14d is a device, such as an HDD and an SSD, that can store, change, and delete data.

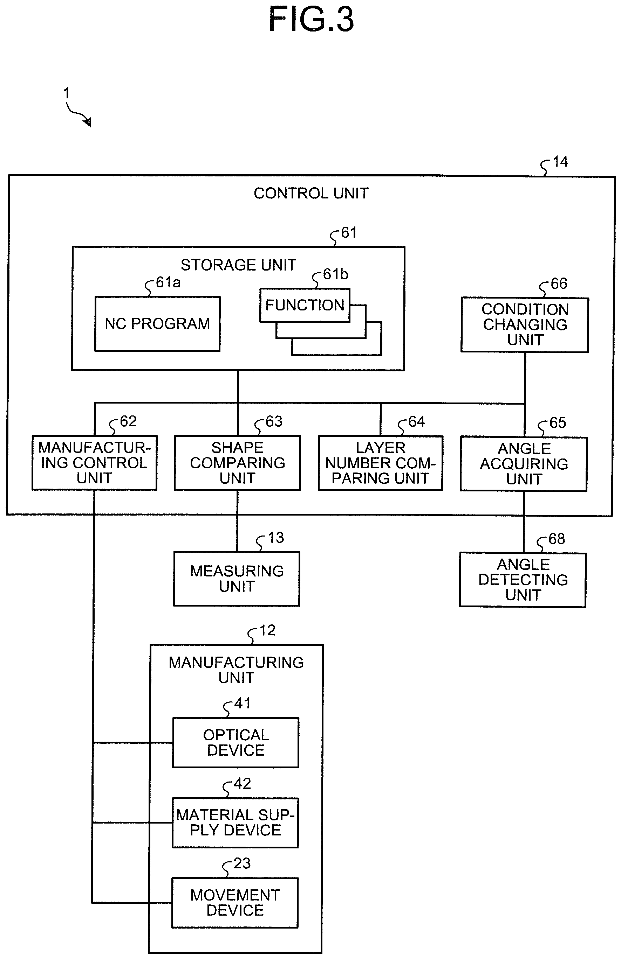

FIG. 3 is an exemplary block diagram functionally illustrating the configuration of the additive manufacturing apparatus 1 according to the first embodiment. The control unit 14 loads the units illustrated in FIG. 3 by the CPU 14a reading and executing the computer programs stored in the ROM 14b or the storage 14d, for example. As illustrated in FIG. 3, the control unit 14 includes a storage unit 61, a manufacturing control unit 62, a shape comparing unit 63, a layer number comparing unit 64, an angle acquiring unit 65, and a condition changing unit 66, for example.

The storage unit 61 is included in the RAM 14c or the storage 14d, for example. The storage unit 61 stores therein various kinds of information including an NC program 61a. The NC program 61a is an example of numerical control information.

The NC program 61a includes manufacturing information of the layers 3b and the object 3 including the layers 3b. Examples of the information contained in the NC program 61a include the shapes of the object 3 and the layers 3b, the movement path of the nozzle 21, and various data acquired at each position on the movement path, such as the movement speed and the orientation of the nozzle 21, the amount of the material M ejected per unit time, the speed of the ejected material M, the output of the laser light L, and the focal diameter of the laser light L. The NC program 61a may also include other information.

The manufacturing control unit 62 controls the manufacturing unit 12 including the movement device 23, the optical device 41, and the material supply device 42 based on the NC program 61a to manufacture a plurality of layers 3b (object 3). The shape comparing unit 63 compares the result of measurement of the shape of the layers 3b (object 3) by the measuring unit 13 (hereinafter, referred to as a measured shape) with the shape of the layers 3b (object 3) in the NC program 61a or CAD serving as the basis of the NC program 61a (hereinafter, referred to as a model shape).

The layer number comparing unit 64 compares the number of formed layers 3b with a threshold. The angle acquiring unit 65 detects the orientation of the nozzle 21 with an angle detecting unit 68. The angle detecting unit 68 is a rotation angle sensor, such as a rotary encoder, and included in the nozzle 21 or the movement device 23.

The condition changing unit 66 can change the information on the data acquired at the positions on the movement path in the NC program 61a, that is, the movement speed of the nozzle 21, the amount of the material M ejected per unit time, the output of the output laser light L, the focal diameter of the output laser light L, and the relative position of the nozzle 21 with respect to the support surface 11a.

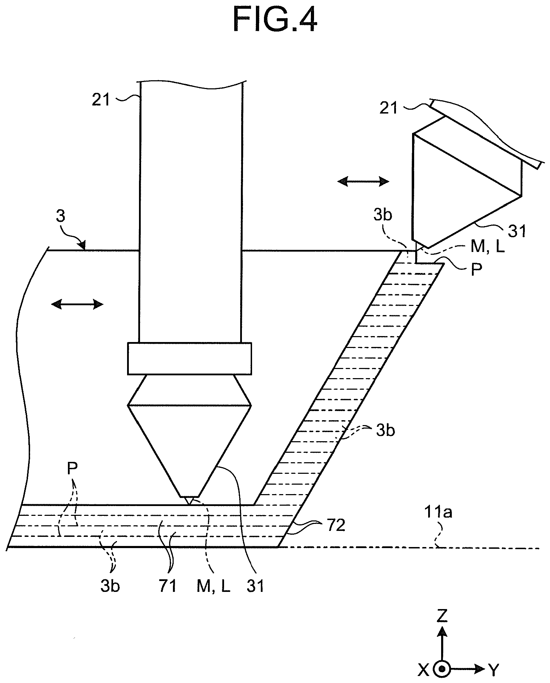

FIG. 4 is an exemplary view schematically illustrating the object 3 and the nozzle 21 according to the first embodiment. FIG. 4 illustrates a section of the object 3 and indicates the boundaries of the layers 3b by the alternate long and two short dashes lines instead of hatching.

As illustrated in FIG. 4, the layers 3b each include a vertical supported part 71 and a non-vertical supported part 72. The vertical supported part 71 is part of the layer 3b supported by the layer 3b below or the support surface 11a in the normal direction of the support surface 11a. The non-vertical supported part 72 is part of the layer 3b not supported in the normal direction of the support surface 11a and expands from the vertical supported part 71 in a direction intersecting the normal direction of the support surface 11a.

To form the vertical supported part 71 of the layer 3b, the nozzle 21 faces downward in the vertical direction. In other words, the nozzle 21 faces in the normal direction of the support surface 11a. To form the non-vertical supported part 72 of the layer 3b, the nozzle 21 faces in a direction intersecting the normal direction of the support surface 11a. To form the vertical supported part 71, the nozzle 21 may face in a direction intersecting the normal direction of the support surface 11a.

With the nozzle 21 facing in a direction intersecting the normal direction of the support surface 11a, the non-vertical supported part 72 can be formed with no jig or support. Furthermore, with the nozzle 21 facing in a direction intersecting the normal direction of the support surface 11a, the non-vertical supported parts 72 need not be formed stepwise, thereby making the surface of the object 3 relatively smooth. Consequently, the additive manufacturing apparatus 1 of the present embodiment can decrease processing time for smoothen the surface of the object 3 and an amount of the material M used.

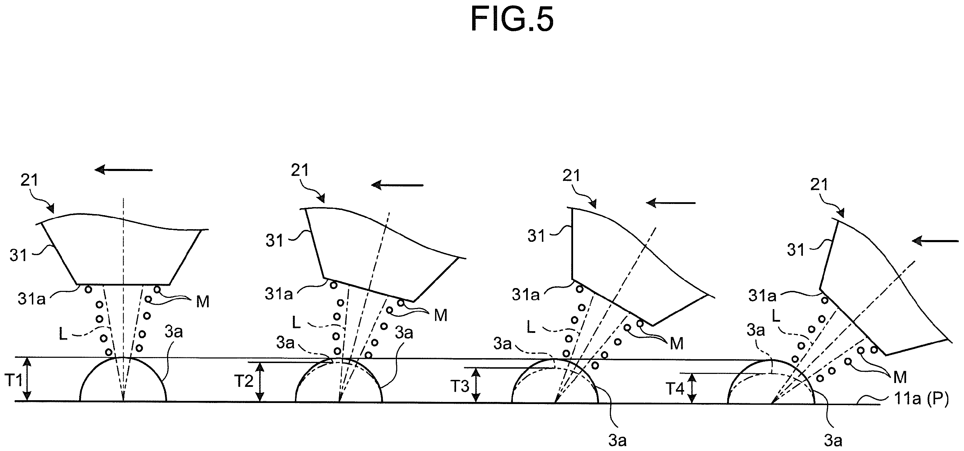

FIG. 5 is an exemplary view schematically illustrating the relation between the inclination angle of the nozzle 21 and the thickness of the layer 3b according to the first embodiment. FIG. 5 illustrates the nozzle 21 facing in various directions and the melting region 3a formed by the nozzle 21. While the melting region 3a illustrated in FIG. 5 schematically has a symmetrical shape, it can have an asymmetrical shape protruding toward the nozzle 21.

As illustrated in FIG. 5, the control unit 14 according to the present embodiment controls the manufacturing unit 12 such that the thickness of the melting region 3a in the normal direction of the support surface 11a is a given thickness T1 independently of the inclination angle of the orientation of the nozzle 21 (hereinafter, referred to as the inclination angle of the nozzle 21) with respect to the normal direction of the support surface 11a. Specifically, the condition changing unit 66 changes the NC program 61a such that the melting region 3a has the given thickness T1. The thickness of the melting region 3a is substantially equal to that of the layer 3b.

FIG. 5 indicates a comparative example of the melting region 3a obtained when the condition changing unit 66 does not change the NC program 61a by the alternate long and two short dashes lines. In the comparative example, as the inclination angle of the nozzle 21 increases, the thickness of the melting region 3a decreases. While the volume of the melting region 3a schematically decreases in FIG. 5, it can be fixed independently of the inclination angle of the nozzle 21.

A thickness T2 of the melting region 3a obtained when the inclination angle of the nozzle 21 is 15°, for example, is 0.9 times the thickness T1. A thickness T3 of the melting region 3a obtained when the inclination angle of the nozzle 21 is 30° is 0.8 times the thickness T1. A thickness T4 of the melting region 3a obtained when the inclination angle of the nozzle 21 is 45° is 0.7 times the thickness T1. The ratios of the thicknesses T2 to T4 to the thickness T1 are given by way of example for explanation.

The melting region 3a (layer 3b) according to the present embodiment is formed to have the substantially equal thickness T1. As a result, as illustrated in FIG. 4, the object 3 is additively manufactured such that layered planes P of the respective layers 3b are substantially parallel to the support surface 11a. The layered plane P is the surface of the layer 3b, and the next layer 3b is layered on the layered plane P.

The following describes additive manufacturing of the object 3 by the additive manufacturing apparatus 1 according to the present embodiment in greater detail. The method for additive manufacturing of the object 3 by the additive manufacturing apparatus 1 is not limited to the method described below.

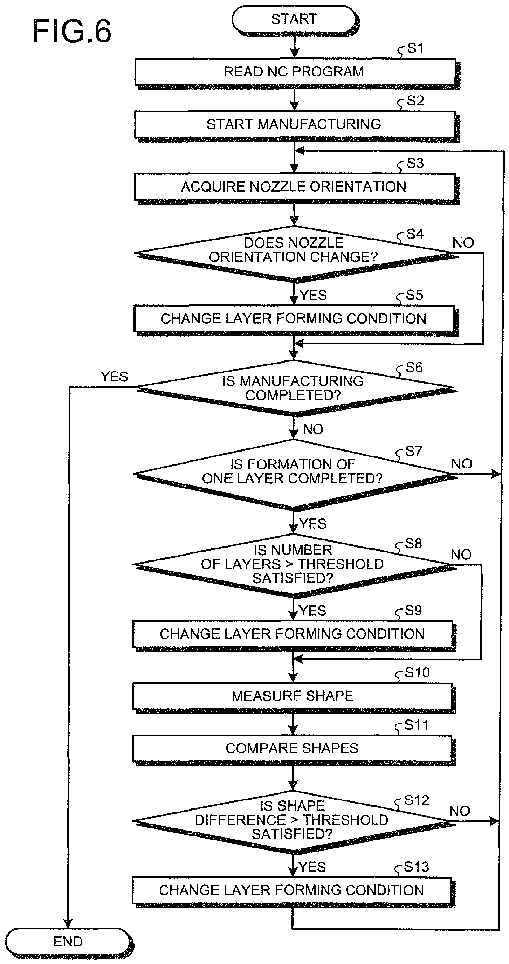

FIG. 6 is an exemplary flowchart of the procedure of additive manufacturing of the object 3 by the additive manufacturing apparatus 1 according to the first embodiment. As illustrated in FIG. 6, the NC program 61a is read from the storage unit 61 (S1).

The NC program 61a is input from the external computer 2, for example. The NC program 61a may be generated from CAD data by the control unit 14. The control unit 14, for example, divides a three-dimensional shape in CAD data into a plurality of layers (slicing). The control unit 14 converts the sliced three-dimensional shape into a group of a plurality of points or cuboids (pixels), for example (rasterization or pixelation). The control unit 14 automatically generates information on the movement path of the nozzle 21 to form a part corresponding to each pixel, the movement speed and the angle of the nozzle 21, the amount and the speed of the ejected material M, and the output and the focal diameter of the output laser light L. The control unit 14, for example, generates the NC program 61a based on required conditions, such as the type of the material M, surface roughness, and manufacturing time.

Subsequently, the manufacturing control unit 62 starts to manufacture the layer 3b based on the read NC program 61a (S2). The movement device 23 controlled by the manufacturing control unit 62, for example, starts to move and rotate the nozzle 21 with respect to the support surface 11a. In addition, the table 11 may start to rotate the object 3. The nozzle 21 controlled by the manufacturing control unit 62 starts to eject the material M and output the laser light L. As a result, the ejected material M is melted or sintered, and formed into the layer 3b.

Subsequently, the condition changing unit 66 acquires the orientation of the nozzle 21 from the angle acquiring unit 65 (S3). The condition changing unit 66 determines whether the orientation of the nozzle 21 has changed (S4). If the orientation of the nozzle 21 has changed (Yes at S4), the condition changing unit 66 changes a condition for forming the layer 3b (hereinafter, referred to as a layer forming condition) included in the NC program 61a, in accordance with the change in the orientation of the nozzle 21 (S5). In other words, the condition changing unit 66 changes the layer forming condition on the basis of a result of the detection of the change in the orientation of the nozzle 21. The condition for forming the layer 3b may also be referred to as the state, element, condition, factor, or parameter for forming the layer 3b, for example.

The layer forming condition represents a command value of the NC program 61a to be input to the manufacturing unit 12, for example. The layer forming condition includes at least one of the movement speed of the nozzle 21 with respect to the support surface 11a (hereinafter, referred to as nozzle movement speed), the amount of the material M ejected from the nozzle 21 per unit time (hereinafter, referred to as a material ejection amount), the output of the laser light L (hereinafter, referred to as laser output), the diameter of the focal point of the laser light L (hereinafter, referred to as a laser diameter), and the position of the nozzle 21 relative to the support surface 11a. The layer forming condition may include other conditions, such as the speed of the material M ejected from the nozzle 21.

The condition changing unit 66, for example, changes the nozzle movement speed based on a change in the orientation of the nozzle 21. The condition changing unit 66 reduces the nozzle movement speed as the inclination angle of the nozzle 21 increases.

Reduction in the nozzle movement speed increase the amount of the material M supplied to the melting region 3a, thereby increasing the thickness of the layer 3b in the normal direction of the support surface 11a. As a result, the thickness of the layer 3b in the normal direction of the support surface 11a is the given thickness T1 independently of the inclination angle of the nozzle 21.

When the inclination angle of the nozzle 21 changes from 0° to 15°, for example, the nozzle movement speed is reduced to 0.9 times, thereby increasing the thickness of the layer 3b from the thickness T2 to the thickness T1. When the inclination angle of the nozzle 21 changes from 0° to 30°, the nozzle movement speed is reduced to 0.85 times, thereby increasing the thickness of the layer 3b from the thickness T3 to the thickness T1. When the inclination angle of the nozzle 21 changes from 0° to 45°, the nozzle movement speed is reduced by 0.7 times, thereby increasing the thickness of the layer 3b from the thickness T4 to the thickness T1. The change ratios of the nozzle movement speed are given by way of example for explanation.

As described above, to deal with an increase in the inclination angle of the nozzle 21, the condition changing unit 66 changes the layer forming condition such that the nozzle 21 forms the layer 3b of an increased thickness in the normal direction of the support surface 11a from a thickness before changing the layer forming condition. In response to a change in another layer forming condition , the condition changing unit 66 changes the layer forming condition in the same manner.

The condition changing unit 66, for example, may increase the material ejection amount as the inclination angle of the nozzle 21 increases. In this case, the amount of the material M supplied to the melting region 3a increases, thereby increasing the thickness of the layer 3b.

The condition changing unit 66 may increase the laser output as the inclination angle of the nozzle 21 increases. Alternatively, the condition changing unit 66 may increase the laser diameter as the inclination angle of the nozzle 21 increases. In these cases, the ratio of the material M melted or sintered by the laser light L in the ejected material M increases, thereby increasing the thickness of the layer 3b.

In addition to changing the laser output or the laser diameter, the condition changing unit 66 may also change the material ejection amount. In other words, the condition changing unit 66 may change a plurality of layer forming conditions based on the change in the orientation of the nozzle 21.

The inclination angle of the nozzle 21 and the change amount of the layer forming condition are determined by a function (expression) 61b stored in the storage unit 61, for example. The function 61b changes the layer forming condition at a given ratio based on the change in the inclination angle of the nozzle 21 using an inclination angle of 0° (vertically downward) as a reference, for example.

The function 61b for causing the melting region 3a (layer 3b) to have the thickness T1 may possibly change based on the specifications of the additive manufacturing apparatus 1, the type and the granularity of the material M, and other various conditions, for example. Consequently, a plurality of functions 61b are determined in advance by polynomial approximation from data obtained by simulations and experiments, for example. The condition changing unit 66 selects the function 61b corresponding to the conditions from the functions 61b stored in the storage unit 61. The conditions may be included in the NC program 61a or input manually.

A unique layer forming condition may be set based on the inclination angle of the nozzle 21. The storage unit 61, for example, stores therein a table defining the layer forming condition corresponding to the inclination angle. The condition changing unit 66 can select the table corresponding to the conditions from a plurality of tables stored in the storage unit 61.

If the change amount of the inclination angle of the nozzle 21 is larger than a threshold, for example, the change amount of the layer forming condition at one time may be limited, and the layer forming condition may be changed a plurality of times. This mechanism can prevent the shape of the layered plane P of the layer 3b from being deformed by a sudden change in the layer forming condition.

If the orientation of the nozzle 21 has not changed (No at S4), the layer forming condition is not changed. Alternatively, if the orientation of the nozzle 21 has not changed, the layer forming condition may be changed by a change amount of 0.

Subsequently, the manufacturing control unit 62 determines whether manufacturing of the object 3 is completed (S6). If manufacturing of the object 3 is not completed yet (No at S6), the manufacturing control unit 62 determines whether formation of one layer is completed (S7). If formation of one layer 3b is not completed yet (No at S7), formation of the layer 3b is continued, and the condition changing unit 66 acquires the orientation of the nozzle 21 again (S3).

If formation of one layer 3b is completed (Yes at S7), the layer number comparing unit 64 determines whether the number of formed layers 3b is larger than a threshold (S8). The threshold is set to 20% and 80% of the total number of the layers 3b included in the NC program 61a, for example. The threshold is given by way of example only and is not limited to this example.

The change amount of the thickness of the layer 3b based on the inclination angle may possibly change depending on the progress of manufacturing, for example. To address this, the condition changing unit 66 according to the present embodiment changes the change amount of the layer forming condition based on the inclination angle of the nozzle 21 depending on early, middle, and final stages of the manufacturing process.

If the number of layers 3b is determined to be larger than 20% of the total number of the layers 3b (Yes at S8)in the middle stage, the condition changing unit 66 additionally changes the layer forming condition (S9). The condition changing unit 66 changes the function 61b, for example. The condition changing unit 66 may additionally change the contents of the layer forming condition. If the number of layers 3b is determined to be larger than 80% of the total number of the layers 3b in the final stage, the condition changing unit 66 additionally changes the layer forming condition. As described above, the condition changing unit 66 additionally changes the layer forming condition in accordance with the number of formed layers 3b. If the number of layers 3b is equal to or smaller than the threshold (No at S8), the condition changing unit 66 does not change the layer forming condition.

Subsequently, the measuring unit 13 measures the shape of the layers 3b (S10). Subsequently, the shape comparing unit 63 compares the measured shape with the model shape (S11). Subsequently, the shape comparing unit 63 determines whether difference in shape between the measured shape and the model shape is larger than a threshold (S12). The difference in shape is the difference between the thickness of the measured shape and that of the model shape in the normal direction of the support surface 11a, for example.

If the difference in shape is larger than the threshold (Yes at S12), the condition changing unit 66 further changes the layer forming condition (S13). The condition changing unit 66 changes the function 61b, for example. The condition changing unit 66 may additionally change the contents of the layer forming condition. As described above, the condition changing unit 66 additionally changes the layer forming condition on the basis of a result of the measurement by the measuring unit 13. By changing the layer forming condition, it is made possible to correct shape errors occurring in the layers 3b in actual manufacturing process.

In response to the change in the layer forming condition or if the difference in shape is equal to or smaller than the threshold (No at S12), the condition changing unit 66 acquires the orientation of the nozzle 21 from the angle acquiring unit 65 again (S3). The procedure (S3 to S13) described above is repeated until manufacturing of the object 3 is completed (Yes at S6). As described above, the additive manufacturing apparatus 1 adds the layers 3b on top of each other, thereby additively manufacturing the object 3.

In the additive manufacturing apparatus 1 according to the first embodiment, the manufacturing unit 12 can change the orientation of the nozzle 21. Typically, if the nozzle 21 changes in orientation and inclines at a larger angle with respect to the normal direction of the support surface 11a, to eject the material M, the layer 3b will be formed in decreased thickness per unit time in the normal direction of the support surface 11a. To address this, the control unit 14 according to the present embodiment can change the layer forming condition for the nozzle 21 in accordance with the change in the orientation of the nozzle 21. As a result, the control unit 14 can change the layer forming condition for the nozzle 21 such that the nozzle 21 can form the layers 3b of substantially uniform thickness in the normal direction of the support surface 11a, for example. Consequently, the additive manufacturing apparatus 1 can additively manufacture the object 3 having a shape closer to a desired shape, such as the model shape.

The layer forming condition includes at least one of the nozzle movement speed, the material ejection amount, the laser output, and the laser diameter. As the inclination angle of the nozzle 21 increases, the control unit 14 reduces the nozzle movement speed, increases the material ejection amount, increases the laser output, or increases the laser diameter, for example. This makes it possible to form the layers 3b of substantially uniform thickness in the normal direction of the support surface 11a, for example. Consequently, the additive manufacturing apparatus 1 can additively manufacture the object 3 having a shape closer to a desired shape.

In response to an increase in the inclination angle of the nozzle 21, the control unit 14 changes the layer forming condition such that the nozzle 21 forms the layer 3b of an increased thickness in the normal direction of the support surface 11a from a thickness before changing the layer forming condition. As a result, the control unit 14 can change the layer forming condition for the nozzle 21 so as to form the layers 3b of substantially uniform thickness in the normal direction of the support surface 11a, for example. Consequently, the additive manufacturing apparatus 1 can additively manufacture the object 3 having a shape closer to a desired shape.

Along with the addition of the layers 3b formed by the nozzle 21, shape errors in the layers 3b may be accumulated. To address this, the control unit 14 according to the present embodiment can change the layer forming condition in accordance with the number of formed layers 3b. A larger number of layers formed 3b is likely to contain larger shape errors, for example. In view of this, the control unit 14 changes the degree of change in the layer forming condition. As a result, the control unit 14 can change the layer forming condition for the nozzle 21 so as to form the layers 3b of substantially uniform thickness in the normal direction of the support surface 11a, for example. Consequently, the additive manufacturing apparatus 1 can additively manufacture the object 3 having a shape closer to a desired shape.

The measuring unit 13 measures the shape of the layer 3b. The control unit 14 can additionally change the layer forming condition on the basis of the result of measurement by the measuring unit 13. If the measured shape of the layer 3b is different from a desired shape of the layer 3b, for example, the control unit 14 changes the degree of changing the layer forming condition. As a result, the control unit 14 can change the layer forming condition for the nozzle 21 so as to form the layers 3b of substantially uniform thickness in the normal direction of the support surface 11a, for example. Consequently, the additive manufacturing apparatus 1 can additively manufacture the object 3 having a shape closer to a desired shape.

The control unit 14 changes the layer forming condition on the basis of the result of detection of a change in the orientation of the nozzle 21. As a result, the layer forming condition can be changed in accordance with the actual orientation of the nozzle 21, thereby enabling the nozzle 21 to form the layers 3b more accurately. Consequently, the additive manufacturing apparatus 1 can additively manufacture the object 3 having a shape closer to a desired shape.

### Second embodiment

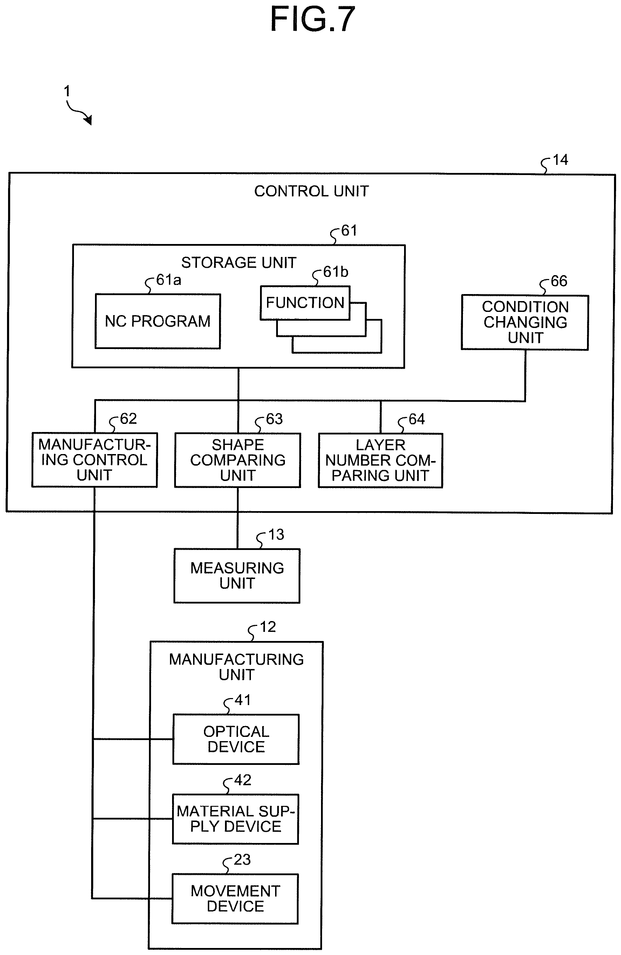

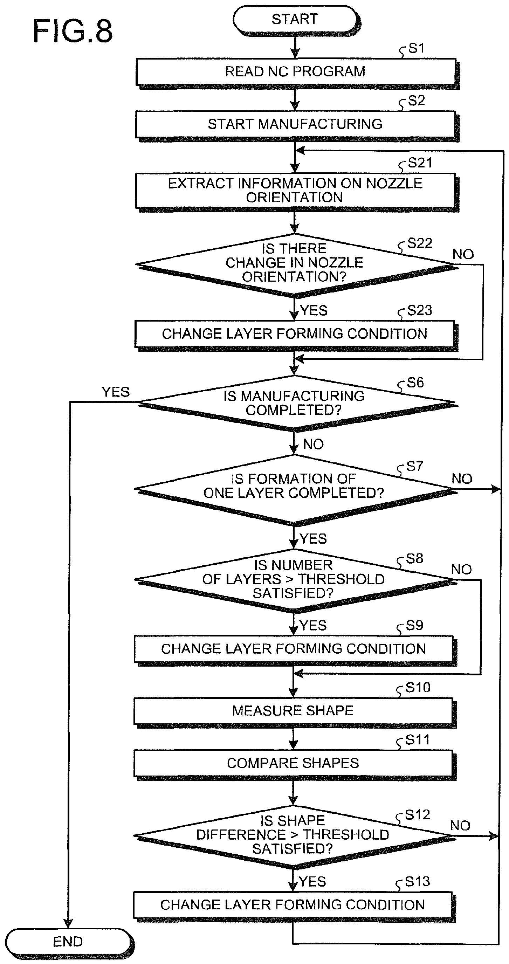

A second embodiment is described below with reference to FIGS. 7 and 8. In the explanation of a plurality of embodiments below, components having the same functions as those of the already described components are denoted by like reference numerals, and explanation thereof may be omitted. All the functions and characteristics of a plurality of components denoted by like reference numerals are not necessarily the same, and the components may have different functions and characteristics corresponding to the embodiments.

FIG. 7 is an exemplary block diagram functionally illustrating the configuration of the additive manufacturing apparatus 1 according to the second embodiment. As illustrated in FIG. 7, the second embodiment does not include the angle acquiring unit 65 or the angle detecting unit 68 according to the first embodiment.

FIG. 8 is an exemplary flowchart of the additive manufacturing procedure of the object 3 by the additive manufacturing apparatus 1 according to the second embodiment. In the second embodiment, as illustrated in FIG. 8, the NC program 61a is read from the storage unit 61 (S1), and the manufacturing control unit 62 starts forming the layer 3b (S2). The condition changing unit 66 extracts information on the orientation of the nozzle 21 from the NC program 61a (S21). The information on the orientation of the nozzle 21 includes a command value of the NC program 61a to be input to the manufacturing unit 12 and indicates the inclination angle of the nozzle 21 at each position on the movement path of the nozzle 21.

Subsequently, the condition changing unit 66 determines whether the information on the orientation of the nozzle 21 changes (S22). The condition changing unit 66, for example, determines whether the orientation of the nozzle 21 changes at the next position on the movement path of the nozzle 21. The timing of the determination is not limited to this example. The condition changing unit 66, for example, may determine a change in the orientation of the nozzle 21 at the present position or at a position where the nozzle 21 is to be disposed in n seconds.

In response to a change in the information on the orientation of the nozzle 21 (Yes at S22), the condition changing unit 66 changes the layer forming condition in accordance with the change in the orientation of the nozzle 21 (S23), as with the processing (S5) in the first embodiment. As described above, the condition changing unit 66 changes the layer forming condition on the basis of the information on the orientation of the nozzle 21. With no change in the information on the orientation of the nozzle 21 (No at S22), the condition changing unit 66 does not change the layer forming condition.

The material ejection amount may be changed at the time of changing the layer forming condition (S23). In this case, it may possibly take a time from when an instruction to change the material ejection amount is given to when the material ejection amount is actually changed because the supply pipe 21a has a long length. Considering the time lag, the present embodiment gives an instruction to change the material ejection amount before the orientation of the nozzle 21 is changed. With this mechanism, the present embodiment can change the material ejection amount simultaneously with changing the orientation of the nozzle 21.

Not only in changing the material ejection amount described above but also in changing the nozzle movement speed, it may possibly take a long time from when an instruction to change the nozzle movement speed is given to when the nozzle movement speed is actually changed. Considering the time lag, the present embodiment may determine whether to change the nozzle movement speed in advance. The timings of determining the orientation of the nozzle 21 (S22) and changing the layer forming condition (S23) can be calculated by experiments and simulations, for example.

The procedure (S6 to S13) similar to that according to the first embodiment is performed, and the process is returned to extracting the information on the orientation of the nozzle 21 (S21). The procedure (S21 to S13) described above is repeated until manufacturing of the object 3 is completed (Yes at S6). As described above, the additive manufacturing apparatus 1 adds the layers 3b on top of each other, thereby additively manufacturing the object 3.

The additive manufacturing apparatus 1 according to the second embodiment extracts the information on the orientation of the nozzle 21 from the NC program 61a for forming the layers 3b. According to the information on the orientation of the nozzle 21, the additive manufacturing apparatus 1 changes the layer forming condition. Thereby, the additive manufacturing apparatus 1 can determine to change the layer forming condition before the orientation of the nozzle 21 is actually changed. Under the changed layer forming condition, the nozzle 21 can form the layers 3b more accurately. Consequently, the additive manufacturing apparatus 1 can additively manufacture the object 3 having a shape closer to the desired shape.

### Third embodiment

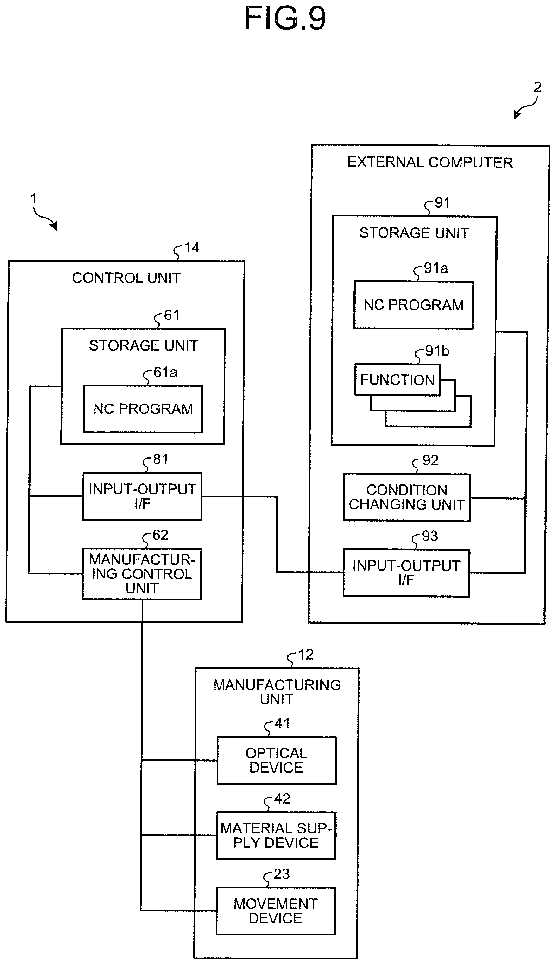

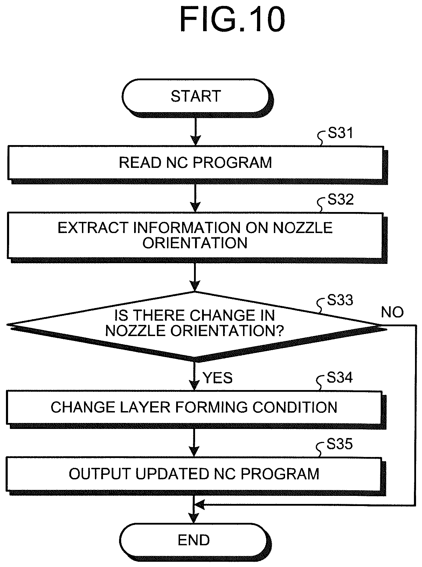

A third embodiment is described below with reference to FIGS. 9 and 10. FIG. 9 is an exemplary block diagram functionally illustrating the configuration of the additive manufacturing apparatus 1 and the external computer 2 according to the third embodiment. As illustrated in FIG. 9, the control unit 14 according to the third embodiment includes an input-output interface (I/F) 81 besides the storage unit 61 and the manufacturing control unit 62.

The external computer 2 loads the units illustrated in FIG. 9 by the CPU 2a reading and executing computer programs stored in the ROM 2b or the storage 2d, for example. As illustrated in FIG. 9, the external computer 2 includes a storage unit 91, a condition changing unit 92, and an input-output I/F 93.

The storage unit 91 is included in the RAM 2c or the storage 2d, for example. The storage unit 91 stores therein various kinds of information including an NC program 91a and a plurality of functions 91b. The NC program 91a is an example of numerical control information. As with the NC program 61a in the storage unit 61, the NC program 91a includes information for manufacturing a plurality of layers 3b and the object 3 including the layers 3b.

The condition changing unit 92 can change the layer forming condition included in the NC program 91a. The input-output I/Fs 81 and 93 are used for communications between the additive manufacturing apparatus 1 and the external computer 2.

FIG. 10 is an exemplary flowchart of the procedure of changing the layer forming condition in the NC program 91a by the external computer 2 according to the third embodiment. As illustrated in FIG. 9, the NC program 91a is read from the storage unit 91 (S31). The NC program 91a is stored in the storage unit 91 in advance, for example. The external computer 2 may generate the NC program 91a from CAD data.

Subsequently, the condition changing unit 92 extracts information on the orientation of the nozzle 21 from the NC program 91a (S32). The condition changing unit 92 determines whether the nozzle 21 changes in orientation in additive manufacturing of the object 3 by the NC program 91a (S33) .

In response to a change in the orientation of the nozzle 21 (Yes at S33), the condition changing unit 92 changes the layer forming condition in the NC program 91a in accordance with the change in the orientation of the nozzle 21 (S34). The condition changing unit 92 changes the layer forming condition using the functions 91b stored in the storage unit 91, for example. Thus, the condition changing unit 92 changes the layer forming condition in the NC program 91a on the basis of the information on the orientation of the nozzle 21. The condition changing unit 92 outputs the NC program 91a containing the changed layer forming condition as an updated NC program 91a (S35).

The external computer 2 inputs the updated NC program 91a to the additive manufacturing apparatus 1 via the input-output I/Fs 81 and 93. The NC program 91a is stored in the storage unit 61 as the NC program 61a. The manufacturing control unit 62 performs additive manufacturing based on the NC program 61a.

If the orientation of the nozzle 21 does not change (No at S33), the layer forming condition is not changed. The external computer 2 inputs the NC program 91a (NC program 61a) to the additive manufacturing apparatus 1. The manufacturing control unit 62 performs additive manufacturing based on the NC program 61a.

Changing the layer forming condition in the NC program 91a by the condition changing unit 92 is carried out by CAD/CAM software that can generate and edit the NC program 91a, for example. Changing the layer forming condition is not limited to this example and may be carried out by software other than the CAD/CAM software. If the NC program 91a is generated by general-purpose CAD/CAM software that does not support changing the layer forming condition, the layer forming condition can be changed.

In the additive manufacturing apparatus 1 and the external computer 2 according to the third embodiment, the external computer 2 extracts the information on the orientation of the nozzle 21 d from the NC program 91a for forming the layers 3b. According to the information on the orientation of the nozzle 21, the external computer 2 changes the layer forming condition in the NC program 91a. Thereby, the external computer 2 can determine to change the layer forming condition before the orientation of the nozzle 21 is actually changed. Under the changed layer forming condition, the nozzle 21 can form the layers 3b more accurately. Consequently, the additive manufacturing apparatus 1 can additively manufacture the object 3 having a shape closer to a desired shape. The additive manufacturing apparatus 1 including the nozzle 21 may not be adaptable to changing the layer forming condition or the NC program 91a. Also in this case, the additive manufacturing apparatus 1 can additively manufacture the object 3 having a shape closer to the desired shape by the NC program 91a containing the layer forming condition changed by the external computer 2.

The external computer 2 according to the third embodiment collectively changes the layer forming condition in the NC program 91a. In a modification, the additive manufacturing apparatus 1 according to the first or the second embodiment may collectively change the layer forming condition in the NC program 61a and perform additive manufacturing based on the updated NC program 61a. In this case, changing the layer forming condition in the NC program 91a by the condition changing unit 92 illustrated in FIG. 10 is replaced by changing the layer forming condition in the NC program 61a by the condition changing unit 66.

The computer program executed by the additive manufacturing apparatus 1 and the external computer 2 according to the embodiments described above is recorded and provided in a computer-readable recording medium, such as a compact disc read only memory (CD-ROM), a flexible disk (FD), a compact disc recordable (CD-R), and a digital versatile disc (DVD), as an installable or executable file.

The computer program executed by the additive manufacturing apparatus 1 and the external computer 2 according to the embodiments above may be stored in a computer connected to a network, such as the Internet, and provided by being downloaded via the network. Furthermore, the computer program executed by the additive manufacturing apparatus 1 and the external computer 2 according to the embodiments above may be provided or distributed via a network, such as the Internet.

The computer program according to the embodiments above may be embedded and provided in a ROM, for example.

The computer program executed by the additive manufacturing apparatus 1 and the external computer 2 according to the embodiments above has a module configuration including the units described above (the storage unit 61, the manufacturing control unit 62, the shape comparing unit 63, the layer number comparing unit 64, the angle acquiring unit 65, the condition changing unit 66, the input-output I/F 81, the storage unit 91, the condition changing unit 92, and the input-output I/F 93). In actual hardware, the CPU (processor) reads and executes the computer program from the storage medium described above to load the units on the main memory. As a result, the units described above are generated on the main memory

The embodiments described above can change the layer forming condition in detail. By checking the effects of changing the manufacturing condition by simulations, for example, the embodiments can effectively change the layer forming condition.

According to at least one of the first to third embodiments, the manufacturing unit can change the orientation of the nozzle. Typically, if the nozzle changes in orientation and inclines at a larger angle with respect to the normal direction of the support surface to eject the powder, the layers will be formed in decreased thickness per unit time in the normal direction of the support surface. To address this, the control unit according to the embodiments can change the layer forming condition for the nozzle in accordance with the change in the orientation of the nozzle. As a result, the control unit can change the layer forming condition for the nozzle such that the nozzle forms the layers of substantially uniform thickness in the normal direction of the support surface, for example. Consequently, the additive manufacturing apparatus can additively manufacture the object having a shape closer to a desired shape.

## Claims

1. An additive manufacturing apparatus (1) comprising:
a support surface (11a) that supports an object (3);
a manufacturing unit (12) comprising a nozzle (21) being changeable in orientation, the nozzle (21) configured to move relative to the support surface (11a), eject powder (M), and output an energy ray (L) to melt or sinter the powder (M), thereby forming a layer (3b) of the object (3); and
a control unit (14) configured to change a layer forming condition for the nozzle (21) in accordance with a change in the orientation of the nozzle (21), wherein
the layer forming condition includes at least one of movement speed of the nozzle (21) with respect to the support surface (11a), an amount of the powder (M) ejected from the nozzle (21) per unit time, output of the energy ray (L), a diameter of a focal point of the energy ray (L), and a position of the nozzle (21) relative to the support surface (11a), **characterized in that**
the control unit (14) is configured to change, in response to an increase in an inclination angle of the orientation of the nozzle (21) with respect to a normal direction (Z) of the support surface (11a), the layer forming condition such that the nozzle (21) forms the layer (3b) of an increased thickness (T1) in the normal direction (Z) of the support surface (11a) from a thickness (T2, T3, T4) before changing the layer forming condition.

2. The additive manufacturing apparatus (1) according to claim 1, further comprising:
a measuring unit (13) configured to measure a shape of the layer (3b), wherein
the control unit (14) is configured to change the layer forming condition on the basis of a result of measurement by the measuring unit (13).

3. An additive manufacturing method comprising:
moving a nozzle (21) relative to a support surface (11a), ejecting powder (M) from the nozzle (21), and outputting an energy ray (L) from the nozzle (21) to melt or sinter the powder (M), thereby forming a layer (3b) of the object (3), the object (3) that is supported by the support surface (11a);
changing an orientation of the nozzle (21); and
changing a layer forming condition for the nozzle (21) in accordance with a change in the orientation of the nozzle (21), wherein
the layer forming condition includes at least one of movement speed of the nozzle (21) with respect to the support surface (11a), an amount of the powder (M) ejected from the nozzle (21) per unit time, output of the energy ray (L), a diameter of a focal point of the energy ray (L), and a position of the nozzle (21) relative to the support surface (11a), and
the changing the layer forming condition comprises changing, in response to an increase in an inclination angle of the orientation of the nozzle (21) with respect to a normal direction (Z) of the support surface (11a), the layer forming condition such that the nozzle (21) forms the layer (3b) of an increased thickness (T1) in the normal direction (Z) of the support surface (11a) from a thickness (T2, T3, T4) before changing the layer forming condition.

4. The additive manufacturing method according to claim 3, further comprising:
measuring a shape of the layer (3b); and
changing the layer forming condition on the basis of a result of measurement of the shape of the layer (3b).

5. The additive manufacturing method according to claim 3 or 4, further comprising:
detecting the change in the orientation of the nozzle (21), wherein
the condition changing comprises changing the layer forming condition on the basis of a result of detection of the change in the orientation of the nozzle (21).

6. The additive manufacturing method according to claim 3 or 4, further comprising:
extracting information on the orientation of the nozzle (21) from numerical control information (61a) for forming the layer (3b), wherein
the condition changing comprises changing the layer forming condition on the basis of the information on the orientation of the nozzle (21).

7. The additive manufacturing method according to claim 3 or 4, further comprising:
extracting information on the orientation of the nozzle (21) from numerical control information (61a) for forming the layer (3b), wherein
the condition changing comprises changing the layer forming condition in the numerical control information on the basis of the information on the orientation of the nozzle (21) .

8. A computer program product including programmed instructions embodied in and stored on a non-transitory computer readable medium, wherein, when executed by a computer (14; 2) included in or controlling an additive manufacturing apparatus (1) comprising: a support surface (11a) that supports an object (3); a manufacturing unit (12) comprising a nozzle (21) being changeable in orientation, the nozzle (21) configured to move relative to the support surface (11a), eject powder (M), and output an energy ray (L) to melt or sinter the powder (M), thereby forming a layer (3b) of the object (3); and a control unit (14) configured to change a layer forming condition for the nozzle (21) in accordance with a change in the orientation of the nozzle (21), the instructions cause the computer (14; 2) to perform:
changing the layer forming condition, wherein
the layer forming condition includes at least one of movement speed of the nozzle (21) with respect to the support surface (11a), an amount of the powder (M) ejected from the nozzle (21) per unit time, output of the energy ray (L), a diameter of a focal point of the energy ray (L), and a position of the nozzle (21) relative to the support surface (11a), and
the changing the layer forming condition comprises changing, in response to an increase in an inclination angle of the orientation of the nozzle (21) with respect to a normal direction (Z) of the support surface (11a), the layer forming condition such that the nozzle (21) forms the layer (3b) of an increased thickness (T1) in the normal direction (Z) of the support surface (11a) from a thickness (T2, T3, T4) before changing the layer forming condition.

9. The computer program product according to claim 8, wherein the instructions cause the computer (14; 2) to further perform:
detecting the change in the orientation of the nozzle (21), wherein
the changing the layer forming condition comprises changing the layer forming condition on the basis of a result of detection of the change in the orientation of the nozzle (21) .

10. The computer program product according to claim 8, wherein the instructions cause the computer (14; 2) to further perform:
extracting information on the orientation of the nozzle (21) from numerical control information (61a; 91a) for forming the layer (3b), wherein
the changing the layer forming condition comprises changing the layer forming condition on the basis of the information on the orientation of the nozzle (21).

11. The computer program product according to claim 8, wherein the instructions cause the computer (14; 2) to further perform:
extracting information on the orientation of the nozzle (21) from numerical control information (61a; 91a) for forming the layer (3b), wherein
the changing the layer forming condition comprises changing the layer forming condition in the numerical control information on the basis of the information on the orientation of the nozzle (21).

## Patentansprüche

1. Eine additive Herstellungsvorrichtung (1), aufweisend:
eine Tragoberfläche (11a), die ein Objekt (3) trägt;
eine Herstellungseinheit (12) mit einer Düse (21), die in einer Orientierung änderbar ist, wobei die Düse (21) konfiguriert ist, um sich relativ zu der Tragoberfläche (11a) zu bewegen, ein Pulver (M) auszustoßen, und einen Energiestrahl (L) auszugeben, um das Pulver (M) zu schmelzen oder zu sintern, wodurch eine Schicht (3b) des Objekts (3) ausgebildet wird; und
eine Steuereinheit (14), die konfiguriert ist, um eine Schicht, die eine Bedingung für die Düse (21) ausbildet, in Übereinstimmung mit einer Änderung in der Orientierung der Düse (21) zu ändern, wobei
die Schichtausbildungsbedingung mindestens eines von einer Bewegungsgeschwindigkeit der Düse (21) mit Bezug auf die Tragoberfläche (11a), einer Menge des aus der Düse (21) pro Einheitszeit ausgestoßenen Pulvers (M), einer Ausgabe des Energiestrahls (L), einem Durchmesser eines Brennpunkts des Energiestrahls (L) und einer Position der Düse (21) relativ zu der Tragoberfläche (11a) umfasst,
**dadurch gekennzeichnet, dass**
die Steuereinheit (14) konfiguriert ist, um im Ansprechen auf eine Vergrößerung eines Neigungswinkels der Orientierung der Düse (21) mit Bezug auf eine Normalenrichtung (Z) der Tragoberfläche (11a) die Schichtausbildungsbedingung derart zu ändern, dass die Düse (21) die Schicht (3b) einer vergrößerten Dicke (T1) in der Normalenrichtung (Z) der Tragoberfläche (11a) von einer Dicke (T2, T3, T4) vor einer Änderung der Schichtausbildungsbedingung ausbildet.

2. Die additive Herstellungsvorrichtung (1) nach Anspruch 1, ferner aufweisend:
eine Messeinheit (13), die konfiguriert ist, um eine Form der Schicht (3b) zu messen, wobei
die Steuereinheit (14) konfiguriert ist, um die Schichtausbildungsbedingung auf der Basis eines Messergebnisses von der Messeinheit (13) zu ändern.

3. Ein additives Herstellungsverfahren, aufweisend:
Bewegen einer Düse (21) relativ zu einer Tragoberfläche (11a), Ausstoßen von Pulver (M) aus der Düse (21), und Ausgeben eines Energiestrahls (L) aus der Düse (21), um das Pulver (M) zu schmelzen oder zu sintern, wodurch eine Schicht (3b) des Objekts (3) ausgebildet wird, wobei das Objekt (3) durch die Tragoberfläche (11a) getragen wird;
Ändern einer Orientierung der Düse (21); und
Ändern einer Schichtausbildungsbedingung für die Düse (21) in Übereinstimmung mit einer Änderung in der Orientierung der Düse (21), wobei
die Schichtausbildungsbedingung mindestens eines von einer Bewegungsgeschwindigkeit der Düse (21) mit Bezug auf die Tragoberfläche (11a), einer Menge des aus der Düse (21) pro Einheitszeit ausgestoßenen Pulvers (M), einer Ausgabe des Energiestrahls (L), einem Durchmesser eines Brennpunkts des Energiestrahls (L) und einer Position der Düse (21) relativ zu der Tragoberfläche (11a) umfasst, und
das Ändern der Schichtausbildungsbedingung ein derartiges Ändern im Ansprechen auf eine Vergrößerung eines Neigungswinkels der Orientierung der Düse (21) mit Bezug auf eine Normalenrichtung (Z) der Tragoberfläche (11a), der Schichtausbildungsbedingung aufweist, dass die Düse (21) die Schicht (3b) einer vergrößerten Dicke (T1) in der Normalenrichtung (Z) der Tragoberfläche (11a) von einer Dicke (T2, T3, T4) vor einer Änderung der Schichtausbildungsbedingung ausbildet.

4. Das additive Herstellungsverfahren nach Anspruch 3, ferner aufweisend:
Messen einer Form der Schicht (3b); und
Ändern der Schichtausbildungsbedingung auf der Basis eines Messergebnisses der Form der Schicht (3b).

5. Das additive Herstellungsverfahren nach Anspruch 3 oder 4, ferner aufweisend:
Erfassen der Änderung in der Orientierung der Düse (21), wobei
die Bedingungsänderung ein Ändern der Schichtausbildungsbedingung auf der Basis eines Ergebnisses einer Erfassung der Änderung in der Orientierung der Düse (21) aufweist.

6. Das additive Herstellungsverfahren nach Anspruch 3 oder 4, ferner aufweisend:
Extrahieren von Informationen über die Orientierung der Düse (21) aus numerischen Steuerinformationen (61a) zum Ausbilden der Schicht (3b), wobei
die Bedingungsänderung ein Ändern der Schichtausbildungsbedingung auf der Basis der Informationen über die Orientierung der Düse (21) aufweist.

7. Das additive Herstellungsverfahren nach Anspruch 3 oder 4, ferner aufweisend:
Extrahieren von Informationen über die Orientierung der Düse (21) aus numerischen Steuerinformationen (61a) zum Ausbilden der Schicht (3b), wobei
die Bedingungsänderung ein Ändern der Schichtausbildungsbedingung in den numerischen Steuerinformationen auf der Basis der Informationen über die Orientierung der Düse (21) aufweist.

8. Ein Computerprogrammprodukt einschließlich programmierten Instruktionen, die in einem nicht-transitorischen computerlesbaren Medium enthalten und gespeichert sind, wobei, wenn sie von einem Computer (14; 2) ausgeführt werden, der in einer additiven Herstellungsvorrichtung (1) enthalten ist oder diese steuert, aufweisend: eine Tragoberfläche (11a), die ein Objekt (3) trägt; eine Herstellungseinheit (12) mit einer Düse (21), die in einer Orientierung änderbar ist, wobei die Düse (21) konfiguriert ist, um sich relativ zu der Tragoberfläche (11a) zu bewegen, ein Pulver (M) auszustoßen, und einen Energiestrahl (L) auszugeben, um das Pulver (M) zu schmelzen oder zu sintern, wodurch eine Schicht (3b) des Objekts (3) ausgebildet wird; und eine Steuereinheit (14), die konfiguriert ist, um eine Schicht, die eine Bedingung für die Düse (21) ausbildet, in Übereinstimmung mit einer Änderung in der Orientierung der Düse (21) zu ändern, wobei die Instruktionen den Computer (14; 2) veranlassen, Folgendes durchzuführen:
Ändern der Schichtausbildungsbedingung, wobei
die Schichtausbildungsbedingung mindestens eines von einer Bewegungsgeschwindigkeit der Düse (21) mit Bezug auf die Tragoberfläche (11a), einer Menge des aus der Düse (21) pro Einheitszeit ausgestoßenen Pulvers (M), einer Ausgabe des Energiestrahls (L), einem Durchmesser eines Brennpunkts des Energiestrahls (L) und einer Position der Düse (21) relativ zu der Tragoberfläche (11a) umfasst, und
das Ändern der Schichtausbildungsbedingung ein derartiges Ändern, im Ansprechen auf eine Vergrößerung eines Neigungswinkels der Orientierung der Düse (21) mit Bezug auf eine Normalenrichtung (Z) der Tragoberfläche (11a), der Schichtausbildungsbedingung aufweist, dass die Düse (21) die Schicht (3b) einer vergrößerten Dicke (T1) in der Normalenrichtung (Z) der Tragoberfläche (11a) von einer Dicke (T2, T3, T4) vor einer Änderung der Schichtausbildungsbedingung ausbildet.

9. Das Computerprogrammprodukt nach Anspruch 8, wobei die Instruktionen den Computer (14; 2) veranlassen, ferner durchzuführen:
Erfassen der Änderung in der Orientierung der Düse (21), wobei
das Ändern der Schichtausbildungsbedingung ein Ändern der Schichtausbildungsbedingung auf der Basis eines Ergebnisses einer Erfassung der Änderung in der Orientierung der Düse (21) aufweist.

10. Das Computerprogrammprodukt nach Anspruch 8, wobei die Instruktionen den Computer (14; 2) veranlassen, ferner durchzuführen:
Extrahieren von Informationen über die Orientierung der Düse (21) aus numerischen Steuerinformationen (61a; 91a) zum Ausbilden der Schicht (3b), wobei
das Ändern der Schichtausbildungsbedingung ein Ändern der Schichtausbildungsbedingung auf der Basis der Informationen über die Orientierung der Düse (21) aufweist.

11. Das Computerprogrammprodukt nach Anspruch 8, wobei die Instruktionen den Computer (14; 2) veranlassen, ferner durchzuführen:
Extrahieren von Informationen über die Orientierung der Düse (21) aus numerischen Steuerinformationen (61a; 91a) zum Ausbilden der Schicht (3b), wobei
das Ändern der Schichtausbildungsbedingung ein Ändern der Schichtausbildungsbedingung in den numerischen Steuerinformationen auf der Basis der Informationen über die Orientierung der Düse (21) aufweist.

## Revendications

1. Appareil de fabrication additive (1) comprenant :
une surface de support (11a) qui supporte un objet (3) ;
une unité de fabrication (12) comprenant une buse (21) dont l'orientation est modifiable, la buse (21) étant configurée pour se déplacer par rapport à la surface de support (11a), éjecter de la poudre (M) et émettre un rayon d'énergie (L) pour faire fondre ou fritter la poudre (M), formant ainsi une couche (3b) de l'objet (3) ; et
une unité de commande (14) configurée pour modifier une condition de formation de couche pour la buse (21) conformément à une modification de l'orientation de la buse (21), dans lequel
la condition de formation de couche inclut au moins l'un d'une vitesse de déplacement de la buse (21) par rapport à la surface de support (11a), d'une quantité de la poudre (M) éjectée à partir de la buse (21) par unité de temps, de l'émission du rayon d'énergie (L), d'un diamètre d'un point focal du rayon d'énergie (L) et d'une position de la buse (21) par rapport à la surface de support (11a), **caractérisé en ce que**
l'unité de commande (14) est configurée pour modifier, en réponse à une augmentation d'un angle d'inclinaison de l'orientation de la buse (21) par rapport à une direction normale (Z) de la surface de support (11a), la condition de formation de couche de telle sorte que la buse (21) forme la couche (3b) d'une épaisseur (T1) accrue dans la direction normale (Z) de la surface de support (11a) à partir d'une épaisseur (T2, T3, T4) avant modification la condition de formation de couche.

2. Appareil de fabrication additive (1) selon la revendication 1, comprenant en outre :
une unité de mesure (13) configurée pour mesurer une forme de la couche (3b), dans lequel
l'unité de commande (14) est configurée pour modifier la condition de formation de couche sur la base d'un résultat de mesure par l'unité de mesure (13).

3. Procédé de fabrication additive comprenant :
le déplacement d'une buse (21) par rapport à une surface de support (11a), l'éjection de la poudre (M) à partir de la buse (21) et l'émission d'un rayon d'énergie (L) à partir de la buse (21) pour faire fondre ou fritter la poudre (M), formant ainsi une couche (3b) de l'objet (3), l'objet (3) qui est supporté par la surface de support (11a) ;
la modification d'une orientation de la buse (21) ; et
la modification d'une condition de formation de couche pour la buse (21) conformément à une modification de l'orientation de la buse (21), dans lequel
la condition de formation de couche inclut au moins l'un d'une vitesse de déplacement de la buse (21) par rapport à la surface de support (11a), d'une quantité de la poudre (M) éjectée à partir de la buse (21) par unité de temps, de l'émission du rayon d'énergie (L), d'un diamètre d'un point focal du rayon d'énergie (L) et d'une position de la buse (21) par rapport à la surface de support (11a), et
la modification de la condition de formation de couche comprend la modification, en réponse à une augmentation d'un angle d'inclinaison de l'orientation de la buse (21) par rapport à une direction normale (Z) de la surface de support (11a), de la condition de formation de couche de telle sorte que la buse (21) forme la couche (3b) d'une épaisseur (T1) accrue dans la direction normale (Z) de la surface de support (11a) à partir d'une épaisseur (T2, T3, T4) avant modification de la condition de formation de couche.

4. Procédé de fabrication additive selon la revendication 3, comprenant en outre :
la mesure d'une forme de la couche (3b) ; et
la modification de la condition de formation de couche sur la base d'un résultat de mesure de la forme de la couche (3b).

5. Procédé de fabrication additive selon la revendication 3 ou 4, comprenant en outre :
la détection de la modification de l'orientation de la buse (21), dans lequel
la modification de condition comprend la modification de la condition de formation de couche sur la base d'un résultat de détection de la modification de l'orientation de la buse (21).

6. Procédé de fabrication additive selon la revendication 3 ou 4, comprenant en outre :
l'extraction d'informations sur l'orientation de la buse (21) à partir d'informations de commande numérique (61a) pour former la couche (3b), dans lequel
la modification de condition comprend la modification de la condition de formation de couche sur la base des informations sur l'orientation de la buse (21).

7. Procédé de fabrication additive selon la revendication 3 ou 4, comprenant en outre :
l'extraction d'informations sur l'orientation de la buse (21) à partir d'informations de commande numérique (61a) pour former la couche (3b), dans lequel
la modification de condition comprend la modification de la condition de formation de couche dans les informations de commande numérique sur la base des informations sur l'orientation de la buse (21).

8. Produit-programme informatique incluant des instructions programmées incorporées dans et stockées sur un support non transitoire lisible par ordinateur, dans lequel, lorsqu'elles sont exécutées par un ordinateur (14 ; 2) inclus dans ou commandant un appareil de fabrication additive (1) comprenant : une surface de support (11a) qui supporte un objet (3) ; une unité de fabrication (12) comprenant une buse (21) dont l'orientation est modifiable, la buse (21) étant configurée pour se déplacer par rapport à la surface de support (11a), éjecter de la poudre (M) et émettre un rayon d'énergie (L) pour faire fondre ou fritter la poudre (M), formant ainsi une couche (3b) de l'objet (3) ; et une unité de commande (14) configurée pour modifier une condition de formation de couche pour la buse (21) conformément à une modification de l'orientation de la buse (21), les instructions amènent l'ordinateur (14 ; 2) à effectuer :
la modification de la condition de formation de couche, dans lequel
la condition de formation de couche inclut au moins l'un d'une vitesse de déplacement de la buse (21) par rapport à la surface de support (11a), d'une quantité de la poudre (M) éjectée à partir de la buse (21) par unité de temps, de l'émission du rayon d'énergie (L), d'un diamètre d'un point focal du rayon d'énergie (L) et d'une position de la buse (21) par rapport à la surface de support (11a), et
la modification de la condition de formation de couche comprend la modification, en réponse à une augmentation d'un angle d'inclinaison de l'orientation de la buse (21) par rapport à une direction normale (Z) de la surface de support (11a), de la condition de formation de couche de telle sorte que la buse (21) forme la couche (3b) d'une épaisseur (T1) accrue dans la direction normale (Z) de la surface de support (11a) à partir d'une épaisseur (T2, T3, T4) avant modification la condition de formation de couche.

9. Produit-programme informatique selon la revendication 8, dans lequel les instructions amènent l'ordinateur (14 ; 2) à effectuer en outre :
la détection de la modification de l'orientation de la buse (21), dans lequel
la modification de la condition de formation de couche comprend la modification de la condition de formation de couche sur la base d'un résultat de détection de la modification de l'orientation de la buse (21).

10. Produit-programme informatique selon la revendication 8, dans lequel les instructions amènent l'ordinateur (14 ; 2) à effectuer en outre :
l'extraction d'informations sur l'orientation de la buse (21) à partir d'informations de commande numérique (61a ; 91a) pour former la couche (3b), dans lequel
la modification de la condition de formation de couche comprend la modification de la condition de formation de couche sur la base des informations sur l'orientation de la buse (21).

11. Produit-programme informatique selon la revendication 8, dans lequel les instructions amènent l'ordinateur (14 ; 2) à effectuer en outre :
l'extraction d'informations sur l'orientation de la buse (21) à partir d'informations de commande numérique (61a ; 91a) pour former la couche (3b), dans lequel
la modification de la condition de formation de couche comprend la modification de la condition de formation de couche dans les informations de commande numérique sur la base des informations sur l'orientation de la buse (21).
